# EUROPÄISCHE PATENTSCHRIFT

(11) **EP 3 183 149 B1**
(45) Veröffentlichungstag und Bekanntmachung des Hinweises auf die Patenterteilung: **25.04.2018**
(21) Anmeldenummer: 15753668.1
(22) Anmeldetag: 17.08.2015
(51) Int. Cl.: B60T 17/02, F16C 3/28, F04B 39/00, F04B 45/04, F04B 45/047

(54) **ELEKTROMOTOR-PUMPENAGGREGAT**
ELECTRIC MOTOR-PUMP ASSEMBLY
GROUPE MOTOPOMPE À MOTEUR ÉLECTRIQUE

(30) Priorität: 22.08.2014 DE 102014216721
(43) Veröffentlichungstag der Anmeldung: 28.06.2017
(73) Patentinhaber: Continental Teves AG & Co. OHG, 60488 Frankfurt (DE)
(72) Erfinder: KREH, Heinrich, 61197 Florstadt (DE); JÜRGING, Michael, 65779 Kelkheim (DE); NIEPENBERG, Marcel, 37276 Meinhard-Hitzelrode (DE); GONZALEZ, Jose, 32549 Bad Oeynhausen (DE); KOPPEL, Hans-Michael, 65931 Frankfurt (DE); RÜFFER, Manfred, 65843 Sulzbach (DE)
(86) Internationale Anmeldenummer: PCT/EP2015/068841
(87) Internationale Veröffentlichungsnummer: WO 2016/026809

(56) Entgegenhaltungen:
- WO-A1-2010/069963
- DE-A1- 1 528 408
- DE-A1- 2 518 150
- JP-A- 2010 180 806

## Beschreibung

Die Erfindung bezieht sich auf ein Elektromotor-Pumpenaggregat, insbesondere zur Bereitstellung von Druck für eine Bremsbetätigungseinrichtung einer Kraftfahrzeugbremsanlage, mit einem pneumatischen Bremskraftverstärker, insbesondere einem Vakuumbremskraftverstärker, umfassend eine Vakuumpumpe und einen die Vakuumpumpe antreibenden Elektromotor, wobei die Vakuumpumpe wenigstens zwei Arbeitskammern, die jeweils von einem Arbeitselement begrenzt sind, aufweist, wobei jedes Arbeitselement mit einer Pleuelstange verbunden ist, die von einem Kurbeltrieb getragen ist, der aus einem von dem Elektromotor angetriebenen Lagerzapfen besteht, auf den für jede Pleuelstange ein Exzenter drehfest aufgesteckt ist, wozu dieser eine Öffnung aufweist, durch die der Lagerzapfen hindurchragt.

Ein derartiges Elektromotorpumpenaggregat ist in der WO 2010/069963 A1 beschrieben. Die Kurbelwelle ist wie folgt realisiert: Die Abtriebswelle des Elektromotors ist an ihrem aus dem Elektromotorgehäuse herausragenden Ende im Querschnitt verkleinert und bildet damit dort einen Lagerzapfen, auf dem zwei oder auch mehrere Exzenter drehfest angeordnet sind.

Auf den Exzentern ist jeweils das Auge einer Pleuelstange drehbar gelagert. Die Pleuelstange ist wiederum mit dem Arbeitselement der Vakuumpumpe verbunden, wobei es sich um einen Kolben oder um eine Arbeitsmembran handeln kann. Jeder Exzenter ist außerdem einstückig mit einem Wuchtgewicht versehen. Die drehfeste Verbindung der Exzenter mit dem Lagerzapfen wird durch einen Reibschluss hergestellt. Der Lagerzapfen wird dazu durch die Öffnungen im Exzenter gesteckt. Da diese einen etwas kleineren Querschnitt aufweisen als der Lagerzapfen, stellt sich eine Presspassung ein, die aus einem starken Reibschluss zwischen der Mantelfläche der Öffnung und dem Lagerzapfen besteht.

Des Weiteren sind an den Exzentern räumliche Lagecodierungen vorgesehen, die sicherstellen, dass die beiden Exzenter und deren Wuchtgewichte in einer vordefinierten Winkellage zueinander ausgerichtet sind, so dass ein möglichst ruhiger Lauf der Vakuumpumpe erreicht wird. Zur Lagecodierung befinden sich auf der einen Seite eines jeden Exzenters Stifte und auf der anderen Seite Bohrungen, die zur Aufnahme der Stifte vorgesehen sind.

Aus DE 25 18 150 A1 ist eine Exzenterwelle mit einem einzelnen Exzenter bekannt. Der Exzenter ist durch einen Ringkörper gebildet, welcher mittels eines gesonderten Verbindungselements formschlüssig mit einer Welle verbunden ist. Hierbei wird insbesondere vorgeschlagen, dass die Welle eingearbeitete Flächen aufweist und das Verbindungselement als Spritzgußteil durch Einspritzen zwischen dem Ringelement und der Welle hergestellt wird.

Des Weiteren ist aus JP 210 180806 A eine Kurbelwelle für einen Verbrennungsmotor mit mehreren Exzentern bekannt, wobei die Welle mehrere separate, axial voneinander beabstandete Rändelungsabschnitte zur verdrehgesicherten Anbindung von Exzentern aufweist.

Dies macht die Herstellung und die Montage der Exzenter aufwändig. Die Erfindung beruht daher auf der Aufgabe, zu einer einfacheren Bauweise zu gelangen.

Zur Lösung sieht die Erfindung vor, dass die drehfeste Verbindung jeweils durch einen Formschluss hergestellt ist, wozu der Lagerzapfen und die Öffnung einen von einer Kreisform abweichenden Querschnitt haben.

Ein solcher Formschluss beinhaltet gleichzeitig eine Lagecodierung, so dass mit dem Aufstecken der Exzenter auf den Lagerzapfen einerseits durch den Formschluss eine drehfeste Verbindung und andererseits die gewünschte Winkellage erreicht werden.

In einfachster Weise kann der Formschluss dadurch hergestellt werden, dass der Lagerzapfen wenigstens eine seitliche Abflachung aufweist und dass die Mantelfläche jeder Öffnung, die von dem Lagerzapfen durchdrungen wird, jeweils eine Grenzfläche aufweist, die zum Formschluss an die Abflachung angelegt ist.

Um Drehungen der Exzenter auf dem Lagerzapfen auch im laufenden Betrieb sicher zu vermeiden, ist vorgesehen, dass der Lagerzapfen wenigstens zwei gegenüberliegende Abflachungen aufweist, deren Abstand dem Abstand zwischen zwei gegenüberliegenden Grenzflächen der Öffnungen entspricht, so dass jede Grenzfläche zum Formschluss an jeweils eine Abflachung angelegt ist.

Statt mit einzelnen Abflachungen kann der Lagerzapfen auch mit einer Vielzahl von Längsrillen versehen sein, die eine Rändelung bilden. Die Öffnungen in den Exzentern sind mit einer entsprechenden Gegenrändelung versehen, die einen Formschluss mit der Rändelung des Lagerzapfens bilden.

Um die Exzenter leicht auf den gerändelten Lagerzapfen aufstecken zu können, ist vorgesehen, dass das freie Ende des Lagerzapfens einen zum freien Ende des Lagerzapfens konisch zulaufenden Kopf aufweist.

Im Folgenden soll anhand eines Ausführungsbeispiels die Erfindung näher erläutert werden. Dazu zeigen:
Fig.1 eine Ausführung nach dem Stand der Technik,
Fig.2 eine Seitenansicht eines Lagerzapfens als Abtriebswelle eines Elektromotors,
Fig.3 eine Seitenansicht eines Exzenters, passend zum Lagerzapfen gemäß Fig. 2,
Fig.4 einen Kurbeltrieb, der mittels einer Spannhülse mit der Abtriebswelle verbunden ist,
Fig.5 eine Seiten- und eine Querschnittansicht der Spannhülse und
Fig.6 eine weitere Ausführung des Lagerzapfens.

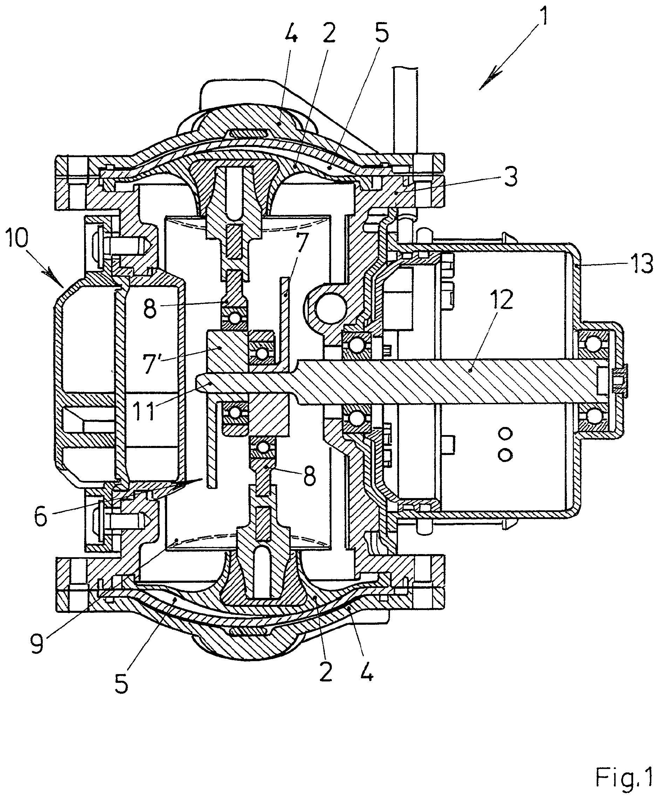

Zunächst wird auf die Fig. 1 Bezug genommen:
Die Vakuumpumpe 1 ist eine Doppelmembranpumpe mit zwei gegenüber liegenden Arbeitsmembranen 2, welche jeweils zwischen einem Pumpengehäuse 3 und einem Arbeitsraumdeckel 4 eingespannt ist und dadurch eine Arbeitskammer 5 begrenzen. Die Arbeitsmembranen 2 sind mittels eines Kurbeltriebs 6 gegensinnig bewegbar, wobei der Kurbeltrieb 6 je Arbeitsmembran 2 einen Exzenter 7 aufweist, auf dem das Auge einer mit der jeweiligen Arbeitsmembran 2 verbundenen Pleuelstange 8 gelagert ist. Durch die hin- und hergehende Bewegung der Arbeitsmembranen 2, die in diesem Ausführungsbeispiel die Arbeitselemente der Vakuumpumpe 1 bilden, wird Luft in die Arbeitskammer aus dem zu evakuierenden Gerät angesaugt, um anschließend in die Atmosphäre ausgeblasen zu werden.

In den Arbeitsraumdeckeln 4 ist - hier nicht gezeigt- jeweils ein Auslassventil vorgesehen, über das die aus der Arbeitskammer ausgestoßene Luft über jeweils einen Auslasskanal im Arbeitsraumdeckel zu einem Auslasskanal im Pumpengehäuse 3 geleitet wird. Die beiden Auslasskanäle im Pumpengehäuse münden in einen Innenraum 9 des Pumpengehäuses 3, dem so genannten Kurbelraum, welcher den Kurbeltrieb 6 umgibt. Ein in dem Pumpengehäuse vorgesehener Luftauslass 10 ermöglicht ein geräuscharmes Ausblasen der Luft aus dem Innenraum 9.

Auf einen im Querschnitt runden Lagerzapfen 11, der die Abtriebswelle 12 eines außen am Pumpengehäuse 3 angebrachten Elektromotors 13 in axialer Richtung verlängert und dessen Achse in der Achse der Abtriebswelle 12 liegt, sind Exzenter 7, 7' mit einer Presspassung aufgesteckt.

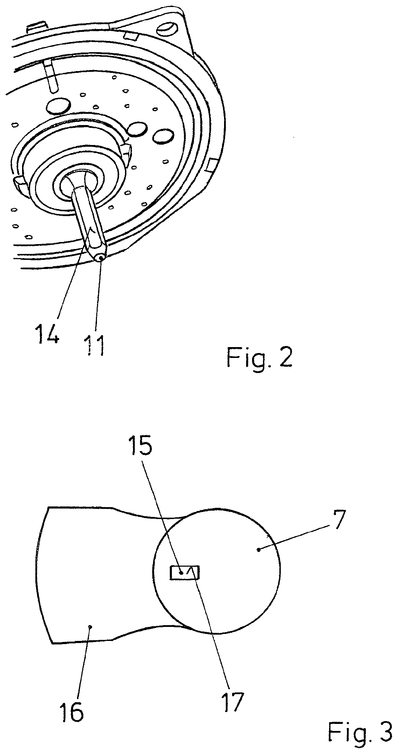

Im Gegensatz dazu sieht die Erfindung, wie sie in den Fig. 2 und 3 dargestellt ist, vor, dass der Lagerzapfen 11 einen eckigen Querschnitt aufweist mit mehreren seitlichen Abflachungen 14, die jeweils parallel zur Achse des Lagerzapfens 11 verlaufen und von denen wenigstens zwei sich gegenüber liegen und parallel verlaufen.

Jeder Exzenter 7 gemäß der Fig. 3 besteht aus einer Scheibe, die deaxial eine Öffnung 15 aufweist, die einen rechteckigen Querschnitt besitzt. Weiterhin erkennt man ein einstückig mit der Scheibe ausgebildetes Wuchtgewicht 16, das sich in eine radiale Richtung erstreckt.

Der Abstand zwischen den beiden langen Seiten der Öffnung 7, die jeweils eine Grenzfläche 17 bilden, ist gleich dem Abstand der beiden vorerwähnten Abflachungen 14. Der Abstand zwischen den kurzen Seiten der Öffnung 15 ist gleich dem Durchmesser des Lagerzapfens 11, bezogen auf eine durch die Achse des Lagerzapfens verlaufende Ebene parallel zu den Abflachungen 14. Auf diese Weise wird ein Formschluss zwischen dem Lagerzapfen und dem Exzenter 7 erzielt.

Die Scheiben weisen eine gewisse Dicke auf, so dass die Öffnung 15 eine gewisse Tiefe besitzt, wodurch die Abflachungen 14 sich über eine ausreichende große Kontaktfläche an die langen Grenzflächen der rechteckigen Öffnung 15 anlegen können. Dies stellt sicher, dass ein ausreichend großes Drehmoment übertragen werden kann.

Des Weiteren wird erreicht, dass ein zweiter Exzenter 7', der in gleicher Weise aufgebaut ist wie der dargestellte erste Exzenter 7, exakt um 180° gegenüber dem ersten Exzenter 7 auf den Lagerzapfen aufgesteckt werden kann.

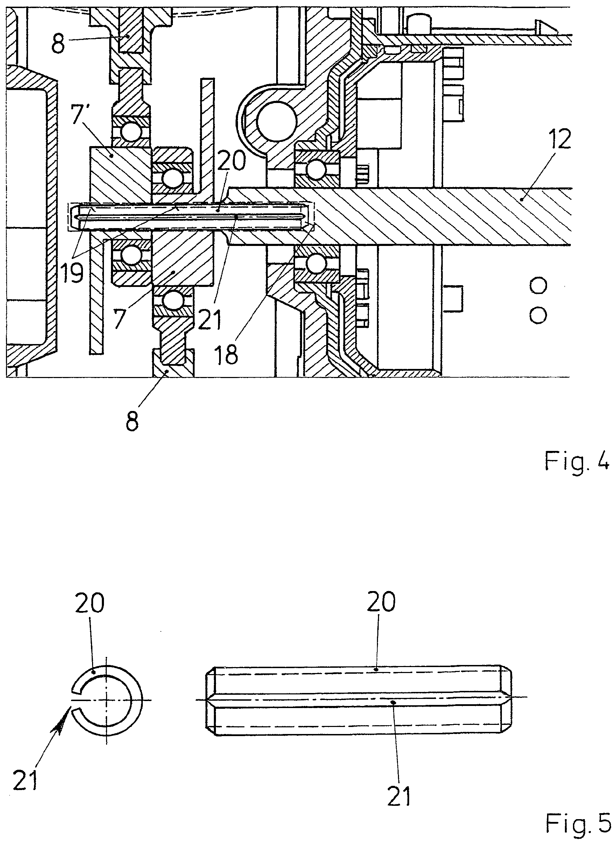

Die Fig. 4 zeigt den Querschnitt durch eine weitere Erfindung. In der Stirnfläche der Abtriebswelle 12 ist eine axiale Sackbohrung 18 eingebracht. Bohrungen 19 in den Exzentern 7 zur Aufnahme des Lagerzapfens 11 sind rund.

Um die Exzenter 7 drehfest mit der Abtriebswelle 12 zu verbinden, ist eine Spannhülse 20 vorgesehen. Hierbei handelt es sich um einen Hohlzylinder mit einem Längsschlitz 21, der aus einem Federstahl hergestellt ist. Der Längsschlitz 21 ermöglicht die radiale Zusammendrückung der Spannhülse 20, wenn diese durch die Bohrungen geführt wird. Die federnden Eigenschaften weiten die Spannhülse 20 anschließend auf und stellen einen sicheren Formschluss sowohl in den Öffnungen der Exzenterscheiben als auch in der Sackbohrung ein.

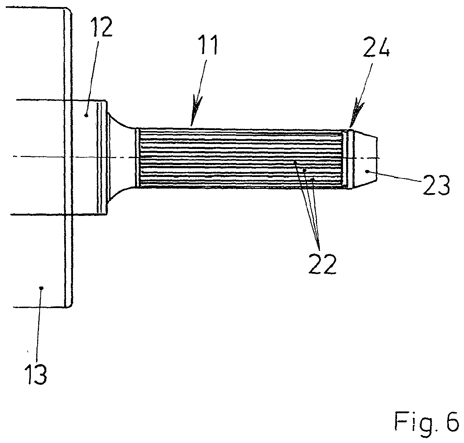

In der Fig. 6 ist eine weitere Ausführung des Lagerzapfens 11 gezeigt. Der Lagerzapfen 11 weist eine Rändelung auf, die aus einer Vielzahl von Längsrillen 22 besteht, was eine formschlüssige Verbindung mit einem Exzenter ermöglicht, der eine entsprechende Gegenrädelung aufweist.

An seinem freien Ende besitzt der Lagerzapfen einen konusförmigen Kopf 23, der das Aufstecken der Exzenter erleichtert. Zwischen der Rändelung und dem Kopf verläuft eine um den Lagerzapfen umlaufende Nut.

### Bezugszeichenliste

- 1: Vakuumpumpe
- 2: Arbeitsmembranen
- 3: Pumpengehäuse
- 4: Arbeitsraumdeckel
- 5: Arbeitskammer
- 6: Kurbeltrieb
- 7: Exzenter
- 8: Pleuelstange
- 9: Innenraum
- 10: Luftauslass
- 11: Lagerzapfen
- 12: Abtriebswelle
- 13: Elektromotor
- 14: Abflachungen
- 15: Öffnung
- 16: Wuchtgewicht
- 17: Grenzfläche
- 18: Sackbohrung
- 19: Bohrung
- 20: Spannhülse
- 21: Längsschlitz
- 22: Längsrillen
- 23: Kopf
- 24: Nut

## Patentansprüche

1. Elektromotor-Pumpenaggregat, insbesondere zur Bereitstellung von Druck für eine Bremsbetätigungseinrichtung einer Kraftfahrzeugbremsanlage mit einem pneumatischen Bremskraftverstärker, insbesondere einem Vakuumbremskraftverstärker, umfassend eine Vakuumpumpe (1) und einen die Vakuumpumpe (1) antreibenden Elektromotor (13), wobei die Vakuumpumpe wenigstens zwei Arbeitskammern (5), die jeweils von einem Arbeitselement begrenzt sind, aufweist, wobei jedes Arbeitselement mit einer Pleuelstange (8) verbunden ist, die von einem Kurbeltrieb getragen ist, der aus einem von dem Elektromotor (13) angetriebenen Lagerzapfen (11) besteht, auf den für jede Pleuelstange (8) ein Exzenter (7, 7') drehfest aufgesteckt ist, wozu diese je eine Öffnung (15) aufweisen, durch die der Lagerzapfen (11) hindurchragt, wobei ein erster Exzenter (7) an einem zweiten Exzenter (7') anliegt **dadurch gekennzeichnet, dass** die drehfeste Verbindung zwischen dem Lagerzapfen (11) und den Exzentern (7,7') jeweils durch einen Formschluss hergestellt ist, wozu der Lagerzapfen (11) und die Öffnung (15) einen von einer Kreisform abweichenden Querschnitt haben, so dass der erste Exzenter (7) exakt um 180° gegenüber dem zweiten Exzenter (7') auf den Lagerzapfen (11) aufgesteckt ist.

2. Elektromotor-Pumpenaggregat nach Anspruch 1, **dadurch gekennzeichnet, dass** der Lagerzapfen (11) wenigstens zwei gegenüberliegende Abflachungen (14) und die Mantelfläche jeder Öffnung (15), die von dem Lagerzapfen (11) durchdrungen wird, jeweils zwei parallele Grenzflächen (17) aufweisen, wobei der Abstand zwischen Abflachungen (14) dem Abstand zwischen den Grenzflächen (17) der Öffnung (15) entspricht, so dass jede Grenzfläche (17) zum Formschluss jeweils an eine Abflachung (14) angelegt ist.

3. Elektromotor-Pumpenaggregat nach Anspruch 1, **dadurch gekennzeichnet, dass** der erste Exzenter (7) in gleicher Weise aufgebaut ist wie der zweite Exzenter (7').

4. Elektromotor-Pumpenaggregat nach Anspruch 1, **dadurch gekennzeichnet, dass** der Lagerzapfen (11) mit einer Vielzahl von Längsrillen (22) versehen ist.

5. Elektromotor-Pumpenaggregat nach Anspruch 41, **dadurch gekennzeichnet, dass** das freie Ende des Lagerzapfens (11) einen zum freien Ende des Lagerzapfens konisch zulaufenden Kopf (23) aufweist.

## Claims

1. Electric motor-pump assembly, particularly for providing pressure for a brake actuation device of a motor vehicle brake system, having a pneumatic brake booster, in particular a vacuum brake booster, comprising a vacuum pump (1) and an electric motor (13) driving the vacuum pump (1), wherein the vacuum pump comprises at least two working chambers (5), each defined by a working element, wherein each working element is connected to a connecting rod (8), which is supported by a crank drive, which comprises a bearing journal (11), which is driven by the electric motor (13) and onto which an eccentric (7, 7') for each connecting rod (8) is rotationally locked, for which purpose said eccentrics each have an opening (15), through which the bearing journal (11) projects, wherein a first eccentric (7) bears against a second eccentric (7'), **characterized in that** the rotationally locked connection between the bearing journal (11) and each of the eccentrics (7, 7') is produced by a positive interlock, for which purpose the bearing journal (11) and the opening (15) have a cross section deviating from a circular shape, so that the first eccentric (7) is fitted onto the bearing journal (11) at precisely 180° relative to the second eccentric (7').

2. Electric motor-pump assembly according to Claim 1, **characterized in that** the bearing journal (11) has at least two opposing flats (14) and the circumferential surface of each opening (15) through which the bearing journal (11) passes has in each case two parallel boundary surfaces (17), wherein the distance between flats (14) corresponds to the distance between the boundary surfaces (17) of the opening (15), so that each boundary surface (17) is set in each case against a flat (14) to form a positive interlock.

3. Electric motor-pump assembly according to Claim 1, **characterized in that** the first eccentric (7) is of similar construction to the second eccentric (7').

4. Electric motor-pump assembly according to Claim 1, **characterized in that** the bearing journal (11) is provided with a plurality of longitudinal channels (22) .

5. Electric motor-pump assembly according to Claim 1, **characterized in that** the free end of the bearing journal (11) comprises a head (23) tapering conically towards the free end of the bearing journal.

## Revendications

1. Groupe motopompe à moteur électrique, en particulier pour fournir de la pression pour un dispositif de servofrein d'une installation de freinage d'un véhicule automobile comprenant un dispositif de servofrein pneumatique, en particulier un dispositif de servofrein à vide, comprenant une pompe à vide (1) et un moteur électrique (13) entraînant la pompe à vide (1), la pompe à vide présentant au moins deux chambres de travail (5) qui sont chacune limitées par un élément de travail, chaque élément de travail étant connecté à une bielle (8) qui est supportée par une commande à bielle, qui se compose d'un tourillon de palier (11) entraîné par le moteur électrique (13) sur lequel est enfiché de manière solidaire en rotation un excentrique (7, 7') pour chaque bielle (8), ce pourquoi celles-ci présentent à chaque fois une ouverture (15) à travers laquelle pénètre le tourillon de palier (11), un premier excentrique (7) s'appliquant contre un deuxième excentrique (7'), **caractérisé en ce que** la connexion solidaire en rotation entre le tourillon de palier (11) et les excentriques (7, 7') est établie à chaque fois par un engagement par correspondance de formes, ce pourquoi le tourillon de palier (11) et l'ouverture (15) présentent une section transversale s'écartant d'une forme circulaire de telle sorte que le premier excentrique (7) soit enfiché sur le tourillon de palier (11) exactement à 180° à l'opposé du deuxième excentrique (7').

2. Groupe motopompe à moteur électrique selon la revendication 1, **caractérisé en ce que** le tourillon de palier (11) présente au moins deux méplats opposés (14) et la surface d'enveloppe de chaque ouverture (15) à travers laquelle passe le tourillon de palier (11) présente à chaque fois deux surfaces limites parallèles (17), la distance entre les méplats (14) correspondant à la distance entre les surfaces limites (17) de l'ouverture (15), de telle sorte que chaque surface limite (17) soit appliquée de manière à venir en prise par correspondance de formes avec un méplat respectif (14).

3. Groupe motopompe à moteur électrique selon la revendication 1, **caractérisé en ce que** le premier excentrique (7) est construit de la même manière que le deuxième excentrique (7 ').

4. Groupe motopompe à moteur électrique selon la revendication 1, **caractérisé en ce que** le tourillon de palier (11) est pourvu d'une pluralité de rainures longitudinales (22).

5. Groupe motopompe à moteur électrique selon la revendication 1, **caractérisé en ce que** l'extrémité libre du tourillon de palier (11) présente une tête (23) se terminant sous forme conique vers l'extrémité libre du tourillon de palier.
